# EUROPÄISCHE PATENTSCHRIFT

(11) **EP 1 562 817 B1**
(45) Veröffentlichungstag und Bekanntmachung des Hinweises auf die Patenterteilung: **19.04.2006**
(21) Anmeldenummer: 03767401.7
(22) Anmeldetag: 04.11.2003
(51) Int. Cl.: B62D 5/093

(54) **HYDRAULISCHE LENKEINRICHTUNG MIT STROMVERSTÄRKUNG**
HYDRAULIC POWER-ASSISTED STEERING DEVICE
DISPOSITIF DE DIRECTION HYDRAULIQUE A AMPLIFICATION DE DEBIT

(30) Priorität: 11.11.2002 DE 10252215
(43) Veröffentlichungstag der Anmeldung: 17.08.2005
(73) Patentinhaber: Bosch Rexroth AG, 70184 Stuttgart (DE)
(72) Erfinder: BERGMANN, Erhard, 19079 Mirow (DE); SCHILDMANN, Manfred, 19370 Parchim (DE); VOSS, Gerhard, 19370 Parchim (DE)
(74) Vertreter: Jaap, Reinhard
(86) Internationale Anmeldenummer: PCT/DE2003/003649
(87) Internationale Veröffentlichungsnummer: WO 2004/043768

(56) Entgegenhaltungen:
- EP-A- 0 725 001

## Beschreibung

Die Erfindung betrifft eine hydraulische Lenkeinrichtung nach dem Oberbegriff des Anspruchs 1.
Solche Lenkeinrichtungen werden insbesondere in langsamfahrenden Fahrzeugen mit hohen Achslasten eingesetzt.

Hydrostatische Lenkeinrichtungen bestehen in der Hauptsache aus einem Drehschiebersteuerventil und einer nach dem Orbitprinzip arbeitenden Dosierpumpe. Das Drehschiebersteuerventil wird aus einer äußeren, im Gehäuse eingepassten Steuerhülse und einem inneren, konzentrisch angeordneten Steuerkolben gebildet. Der Steuerkolben ist einerseits über ein Zahnnabenprofil mit einem Lenkrad und andererseits über eine Stiftverbindung relativ beweglich mit der Steuerhülse verbunden. Die Steuerhülse ist über eine Stiftverbindung und eine Antriebswelle starr mit dem Läuferzahnrad der Dosierpumpe verbunden. Der Steuerkolben ist mittels eines Federelementes gegenüber der Steuerhülse lagezentriert. Gegen die Kraft dieses Federelementes sind Steuerkolben und Steuerhülse begrenzt zueinander drehbar. Zwischen dem Drehschiebersteuerventil und der Dosierpumpe besteht über Kommutatorbohrungen eine hydraulische Verbindung.
Die hydraulische Lenkeinrichtung besitzt Anschlüsse für einen Zulauf, einen Rücklauf und für zwei Zylinderleitungen für den Lenkzylinder.

Diese Lenkeinrichtungen zeichnen sich durch ein hohes Verdrängungsvolumen aus, besitzen aber keine Übersetzungsänderung zwischen Servolenkbetrieb und Notlenkbetrieb. Das bedeutet aber, dass die Lenkeinrichtung bei einem möglichen Ausfall der Versorgungspumpe schlagartig auf Notlenkbetrieb umschaltet und damit die gesamte notwendige Lenkkraft manuell am Lenkrad aufgebracht werden muss. Das ist insbesondere im Straßenverkehr ein Sicherheitsrisiko.

Es gibt deshalb schon seit längerer Zeit Lenkeinrichtungen, die in der konkreten Situation des Wechselns von Servolenkbetrieb auf Notlenkbetrieb automatisch auf ein anderes Übersetzungsverhältnis umschalten.
So sind Lenkeinrichtungen der eingangs genannten Art bekannt, wie sie beispielsweise in der DE 22 28 531 C2 beschrieben ist, bei denen im Servolenkbetrieb alle vorhandenen Kammern der Dosierpumpe an der Ölstrombereitstellung für den Lenkzylinder beteiligt und im Notlenkbetrieb einige dieser Kammern abgeschaltet sind. Diese abgeschalteten Kammern sind dann mit dem Tank verbunden und damit drucklos. Die Größe der Übersetzung richtet sich daher immer nach der Anzahl der im Notlenkbetrieb abgeschalteten Kammern, was letztlich zu abgestuften Übersetzungsverhältnissen führt. Dadurch ist eine optimale Anpassung des Übersetzungsverhältnisses zwischen Servolenkbetrieb und Notlenkbetrieb an die jeweiligen Verhältnisse im Fahrzeug schwierig.

Es sind aber auch Lenkeinrichtungen mit einer Übersetzungsänderung bekannt, die an Stelle der Kammerabschaltungen mit einer Stromverstärkung arbeiten, wie sie zum Beispiel aus der EP 0 725 001 B1 bekannt ist. Diese Lenkeinrichtung mit Stromverstärkung besitzt Anschlüsse für eine Versorgungspumpe, einem hydraulischen Lenkzylinder und dem Versorgungstank. Dabei ist der Pumpenanschluss mit einem der Zylinderanschlüsse über eine Hauptleitung verbunden, in der sich ein Steuerventil und eine Dosierpumpe befinden. Das Steuerventil ist mit einer Eingangsdrossel ausgerüstet, die in der Neutralstellung geschlossen ist. Die Lenkeinrichtung besitzt neben der Hauptleitung ein das Steuerventil und die Dosierpumpe umgehende Bypassleitung, in der sich ein Regelventil befindet, dessen Messdrossel in der Hauptleitung angeordnet ist. Auf Grund der Strömungsverhältnisse an der in der Hauptleitung befindlichen Messdrossel gibt die Druckwaage im Regelventil einen definierten Öffnungsquerschnitt frei. Dadurch fließt ein Zusatzstrom, der sich proportional zum Hauptstrom verhält und der sich hinter der Dosierpumpe wieder mit dem Hauptstrom vereinigt. Somit ergibt sich der Lenkölstrom aus dem Hauptstrom und dem Nebenstrom.
Im Notlenkbetrieb ist die Zulaufleitung drucklos, weil die Versorgungspumpe ausgeschaltet ist. Das für den Lenkkreislauf notwendige Öl wird jetzt allein durch die manuelle Betätigung des Lenkrades und damit von der Dosierpumpe aus dem Versorgungstank angesaugt und zum Lenkzylinder gefördert. An dieser Ölstromförderung ist nur die Hauptleitung beteiligt, da das Regelventil in der Nebenleitung geschlossen ist.
Bei dieser Lenkeinrichtung kann die Baugröße der Dosierpumpe nach den Anforderungen des Notlenkbetriebes ausgewählt und der Zusatzstrom durch eine Abstimmung im 2-Wege-Stromregelventil so bemessen werden, dass der gesamte Ölstrombedarf im Servolenkbetrieb voll gedeckt wird. Das Übersetzungsverhältnis ist also stufenlos vorherbestimmbar und das Verdrängungsvolumen der Lenkeinrichtung im Servolenkbetrieb pro Lenkradumdrehung kann über den Drehzahlbereich annähernd konstant gehalten werden.
Es hat sich aber nun gezeigt, dass im unteren Drehzahlbereich des Servolenkbetriebs kein drehzahlunabhängiges Verdrängungsvolumen pro Umdrehung vorliegt, was zur Folge hat, dass sich zum Beispiel nach einem schnellen Auslenken und einem anschließenden langsameren Einlenken um den gleichen Lenkradwinkel unterschiedliche Radstellungen ergeben. Das beeinflusst das Lenkungsverhalten negativ.

Der Erfindung liegt daher die Aufgabe zu Grunde, eine gattungsgemäße Lenkeinrichtung zu schaffen, die im Servolenkbetrieb über den gesamten Drehzahlbereich ein konstantes Verdrängungsvolumen pro Umdrehung liefert.

Diese Aufgabe wird durch die kennzeichnenden Merkmale des Anspruches 1 gelöst. Weitere Ausgestaltungsmöglichkeiten ergeben sich aus den Unteransprüchen 2 bis 4. Die neue Lenkeinrichtung vermeidet die genannten Nachteile des Standes der Technik.
Unabhängig von der Geschwindigkeit beim Ein- und Auslenken um den gleichen Lenkradwinkel stellt sich jetzt bei Verwendung von Gleichlauflenkzylindern stets der gleiche Radausschlag ein. Das erhöht den Fahrkomfort und die Sicherheit im Stra-ßenverkehr.
Die Anwendung der neuen technischen Lösung ist nicht allein auf Lenkkreisläufe in Loadsensing-Ausführung beschränkt.

Die Erfindung soll anhand eines Ausführungsbeispieles näher erläutert werden. Dazu zeigen:
- Fig. 1:: einen vereinfachten Lenkkreislauf in dynamischer Loadsensing-Ausführung,
- Fig. 2:: einen ähnlichen Lenkkreislauf mit einer konstruktiven Ausführung des Regelventils und
- Fig. 3:: den neuen und den herkömmlichen Stromverlauf des Lenkölstromes der Lenkeinrichtung.

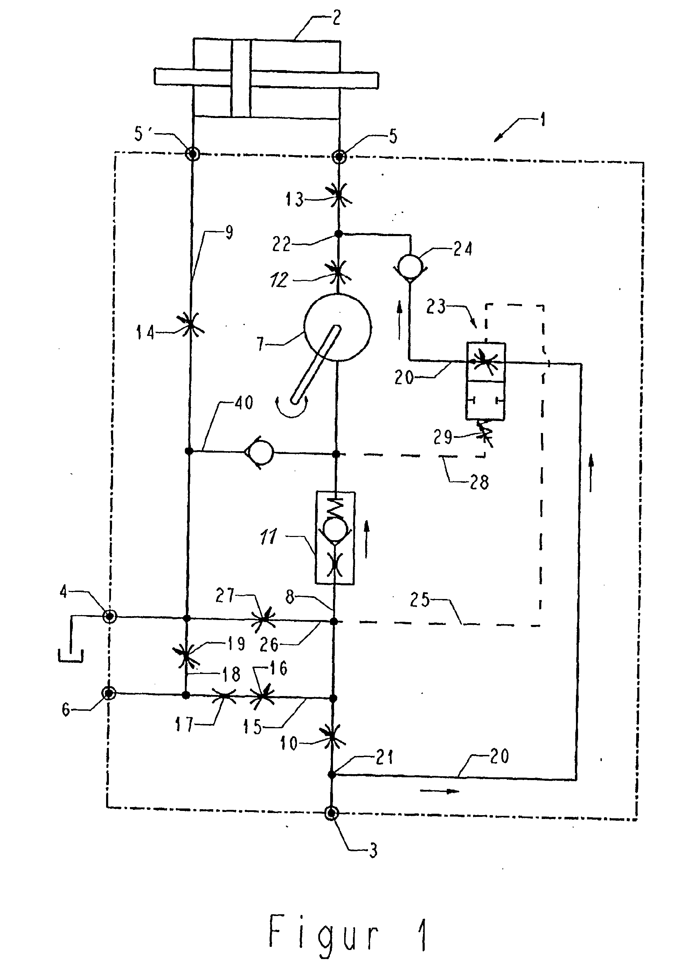

Die Fig. 1 zeigt die Lenkeinrichtung 1 mit einem hydraulischen Lenkzylinder 2. Danach besitzt die Lenkeinrichtung 1 einen Zulaufanschluss 3, der mit dem Lenkungsanschluss eines nicht dargestellten Stromteilventils verbunden ist, einen Rücklaufanschluss 4, der mit einem Versorgungstank verbunden ist, zwei Zylinderanschlüsse 5, 5', die zum Lenkzylinder 2 führen und einen Lastsignalanschluss 6, der mit der federbelasteten Seite des Stromteilventils verbunden ist. Der konstruktive Aufbau dieser Lenkeinrichtung 1 ist hinreichend bekannt und wird daher hier nicht mehr im Einzelnen gezeigt.

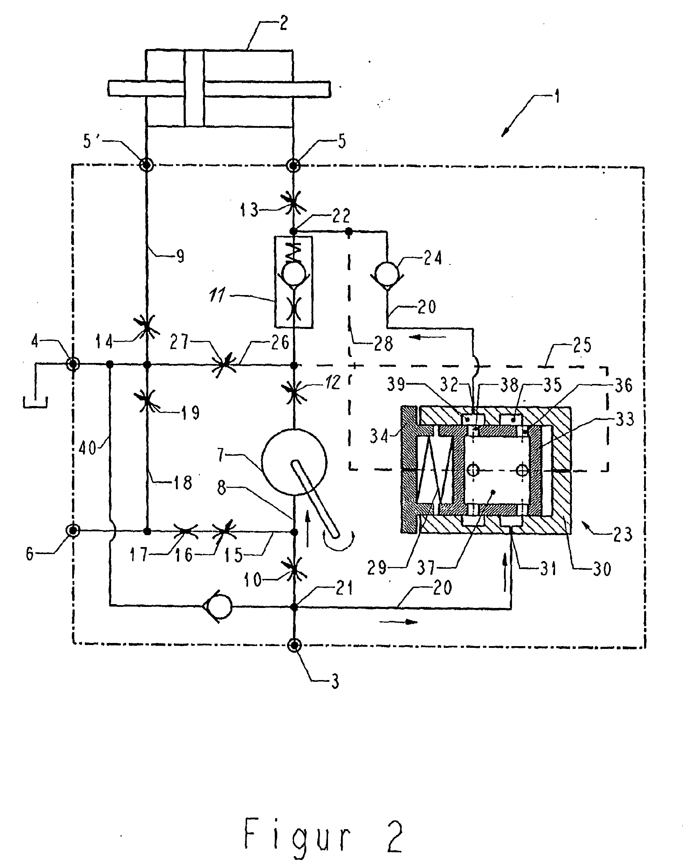

In der Hauptsache besteht die Lenkeinrichtung 1 aus einer Steuereinheit mit einem inneren Steuerkolben und einer äußeren Steuerhülse und einer nach dem Gerotorprinzip arbeitenden Dosierpumpe 7. Der Steuerkolben und die Steuerhülse besitzen miteinander und mit der Dosierpumpe 7 kommunizierende axiale und radiale Kanäle und sind gegen die Kraft einer Druckfeder in einem begrenzten Winkel zueinander drehbar. Die Steuerhülse ist mechanisch mit der Dosierpumpe 7 verbunden.
Die Kanäle in der Steuereinheit der Lenkeinrichtung 1 bilden eine Hauptleitung , die sich aus einer Zulaufleitung 8 und einer Rücklaufleitung 9 zusammensetzt, wobei die Zulaufleitung 8 vom Zulaufanschluss 3 zum Lenkzylinder 2 verläuft und die Rücklaufleitung 9 den Lenkzylinder 2 mit dem Rücklaufanschluss 4 verbindet.
Im Wesentlichen befinden sich in der Zulaufleitung 8 in Stromrichtung betrachtet eine verstellbare Eingangsdrossel 10, ein in Strömungsrichtung öffnendes und federbelastetes Sperrventil 11 mit einer integrierten Drossel, die Dosierpumpe 7, eine erste verstellbare Zylinderdrossel 12 und eine zweite verstellbare Zylinderdrossel 13. In der Rücklaufleitung 9 ist eine verstellbare Rücklaufdrossel 14 vorgesehen. In Strömungsrichtung hinter der Eingangsdrossel 10 zweigt eine Lastsignalleitung 15 ab und führt zum Lastsignalanschluss 6. In dieser Lastsignalleitung 15 ist eine erste verstellbare Lastsignaldrossel 16 und eine Konstantdrossel 17 vorgesehen. Eine Zweigleitung 18 verbindet die Lastsignalleitung 15 mit dem zum Versorgungstank führenden Rücklaufanschluss 4. In dieser Zweigleitung 18 befindet sich eine zweite verstellbare Lastsignaldrossel 19.
Parallel zur Zulaufleitung 8 der Hauptleitung ergibt sich eine Nebenleitung 20, die sich von einem ersten Knotenpunkt 21 in der Zulaufleitung 8 bis zu einem zweiten Knotenpunkt 22 in der Zulaufleitung 8 erstreckt. Dazu befindet sich der erste Knotenpunkt 21 vor der verstellbaren Eingangsdrossel 10.
In dieser Nebenleitung 20 befindet sich ein federbelastetes und druckabhängig arbeitendes Stromregelventil 23 mit einer gesperrten Ausgangsstellung und einer geregelten Betriebsstellung und ein in Richtung zur Zulaufleitung 8 hin öffnendes Rückschlagventil 24, wobei das Rückschlagventil 24 zwischen dem Stromregelventil 23 und dem Knotenpunkt 22 angeordnet ist. Das Stromregelventil 23 besitzt weiterhin eine Steuerleitung 25, welche die nichtfederbelastete Seite des Stromregelventils 23 mit der Zulaufleitung 8 der Hauptleitung verbindet Diese Steuerleitung 25 mündet unmittelbar vor dem federbelasteten Sperrventil 11 in die Zulaufleitung 8 und führt gleichermaßen über eine Verbindungsleitung 26 zum Rücklaufanschluss 4, in der eine verstellbare Absperrdrossel 27 angeordnet ist.
Dagegen ist die federbelastete Seite des Stromregelventils 23 über eine Steuerleitung 28 mit der Zulaufleitung 8 der Hauptleitung verbunden und mündet hinter dem federbelasteten Sperrventil 11 ein. Mit den vor und hinter dem federbelasteten Sperrventil 11 einmündenden Steuerleitungen 25, 28 wirkt das federbelastete Sperrventil 11 wie eine Messdrossel für das Stromregelventil 23. Das Stromregelventil 23 ist außerdem in besonderer Weise mit einer Regelfeder 29 ausgestattet, die in ihrer Vorspannung einstellbar ausgeführt ist, um das Ansprechverhalten des Stromregelventils 23 auf das Ansprechverhalten der Feder des Sperrventils 11 anzupassen. Alternativ wäre auch eine einstellbare Feder des Sperrventils 11.
Nach der Fig. 2 ist das federbelastete Sperrventil 11 im Gegensatz zur Fig. 1 hinter der Dosierpumpe 7 angeordnet. Dazu ist das Stromregelventil 23 in besonderer Weise als ein Zwei-Wege-Strombegrenzungsventil ausgeführt, das aus einem Gehäuse 30 mit einem Eingangsanschluss 31 und einem Ausgangsanschluss 32 für den geregelten Nebenstrom und aus einem als Druckwaage dienenden Regelschieber 33 besteht. Der Regelschieber 33 wird von der Regelfeder 29 belastet, die sich an einem Gehäusedeckel 34 abstützt. Zur Beeinflussung der Federvorspannung ist der Gehäusedeckel 34 verstellbar ausgeführt. Der Eingangsanschluss 31 des Gehäuses 30 ist über einen inneren Ringkanal 35 im Gehäuse 30, mehrere radiale Durchbrüche 36 im Regelschieber 33 und einem inneren Druckraum 37 im Regelschieber 33 über mehrere radiale Durchbrüche 38 und einem Ringkanal 39 mit dem Ausgangsanschluss 32 verbunden. Dabei bilden der Ringkanal 35 und die radialen Durchbrüche 36 am Eingangsanschluss 31 einen veränderlichen Drosselquerschnitt aus, der in der Endstellung des Regelschiebers 33 geschlossen ist.

Das federbelastete Sperrventil 11 und das Stromregelventil 23 sind nun konstruktiv in besonderer Weise aufeinander abgestimmt. So ist die Stärke der Federkraft des federbelasteten Sperrventils 11 einerseits und die Stärke der Kraft der Regelfeder 29 sowie die Länge der positiven Überdeckung des Drosselquerschnittes am Regel schieber 33 andererseits so gewählt, dass das Stromregelventil 23 beim Öffnungsdruck des federbelasteten Sperrventils 11 einen vorherbestimmten Öffnungsquerschnitt freigibt.
Weiterhin sind die Drosselquerschnitte der radialen Durchbrüche 36 so angeordnet und so ausgestaltet, dass ihre Öffnungscharakteristik einen degressiven Verlauf nimmt. Dabei ist dieser degressive Verlauf der Drosselquerschnitte so gewählt, dass er die sich einstellende stromabhängige und progressive Druckdifferenz der Drossel des federbelasteten Sperrventils 11 entgegenwirkt und kompensiert.

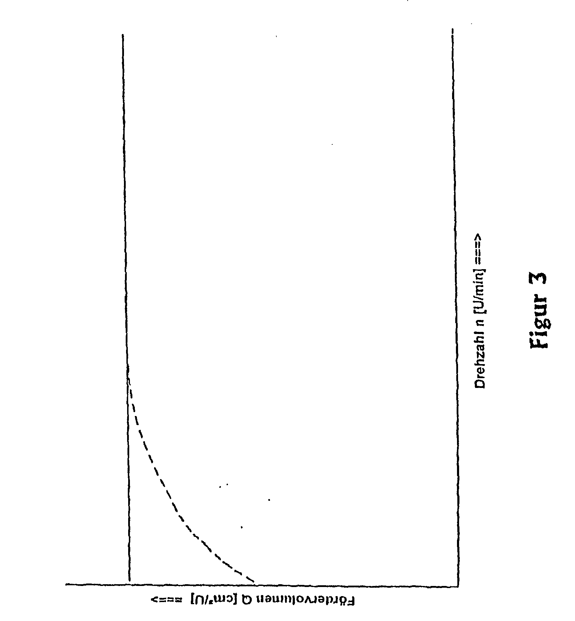

Die Fig. 3 zeigt den Verlauf des Lenkölstromes in Abhängigkeit von der Drehzahl des Lenkrades in der durchgezogenen Kennlinie für die neue Lenkeinrichtung und in der gestrichelten Kennlinie für eine herkömmliche Lenkeinrichtung.

Bei nichtbetätigter Lenkeinrichtung 1 befinden sich die Steuerhülse und der Steuerkolben des Steuerventils in neutraler Stellung, sodass die Eingangsdrossel 10, die beiden verstellbaren Zylinderdrosseln 12, 13, die Rücklaufdrossel 14 und die erste verstellbare Lastsignaldrossel 16 geschlossen sind. Geöffnet sind die zweite verstellbare Lastsignaldrossel 19 und die Absperrdrossel 27, um in der Neutralstellung die Zweigleitung 18 und die Steuerleitung 25 zu entlasten. Weil die Steuerleitung 25 drucklos ist, wird der Regelschieber 33 des Stromregelventils 23 durch die Kraft seiner Regelfeder 29 in der geschlossenen Endstellung gehalten.
Durch Betätigung der Lenkeinrichtung 1 beginnen die zweite verstellbare Lastsignaldrossel 19 und die Absperrdrossel 27 zunächst sich zu schließen, während die bislang geschlossenen Drosseln 10, 16, 12, 13 und 14 sich zu öffnen beginnen. Dabei ist wichtig, dass die Absperrdrossel 27 bereits voll geschlossen ist, bevor die Rücklaufdrossel 14 sich zu öffnen beginnt. Mit der Öffnung der ersten verstellbaren Lastsignaldrossel 16 verlagert sich die Drucksäule innerhalb der Zulaufleitung 8 bis zum federbelasteten Sperrventil 11. Dabei stellt sich vor dem geschlossenen federbelasteten Sperrventil 11 ein von der Druckfeder des Sperrventils 11 getragener steigender Druck ein, der sich über die Steuerleitung 25 auf die nichtdruckfederbelastete Seite des Regelschiebers 33 fortpflanzt und diesen verspannt. Auf Grund der Abstimmung der Federkräfte der Feder des federbelasteten Sperrventils 11 und der Regelfeder 29 des Stromregelventils 23 öffnen das federbelastete Sperrventil 11 und das Stromregelventil 23 etwa zum gleichen Zeitpunkt. Damit ist abgesichert und die Fig. 3 zeigt das deutlich, dass das Regelventil 23 bereits mit Beginn der Lenkbetätigung in die Regelstellung übergeht. Ein Mindeststrom in der Zulaufleitung 8 und damit eine Mindestdrehzahl am Lenkrad sind nicht mehr erforderlich.
Jetzt fließt durch die Zulaufleitung 8 ein Hauptstrom und durch die Nebenleitung 20 ein paralleler Nebenstrom, wobei der Nebenstrom von der sich einstellenden Druckdifferenz über dem federbelasteten Sperrventil 11 gesteuert wird. Damit verhält sich der Nebenstrom proportional zum Hauptstrom. Bei einer entsprechenden konstruktiven Auslegung kann der Nebenstrom bei jeder Drehzahl am Lenkrad die gleiche Größe wie der Hauptstrom annehmen.
Die Abstimmung zwischen dem Stromregelventil 23 und dem federbelasteten Sperrventil 11 kann aber auch so erfolgen, dass der Hauptstrom und der Nebenstrom eine andere Proportionalität zueinander aufweisen. Auf diese Weise lassen sich beliebige Übersetzungsverhältnisse zwischen dem Servolenkbetrieb und dem Notlenkbetrieb realisieren.

Im Notlenkbetrieb, also bei abgeschalteter Versorgungspumpe, ist die Zulaufleitung drucklos. Dadurch bleibt das Stromregelventil 23 geschlossen. Das für den Lenkbetrieb notwendige Öl wird jetzt allein durch die manuelle Betätigung der Dosierpumpe 7 über eine Saugleitung 40 aus dem Versorgungstank angesaugt und zum Lenkzylinder 2 befördert. Dabei wird in der Zulaufleitung 8 hinter der Dosierpumpe 7 ein erforderlicher Druck aufgebaut, der das federbelastete Sperrventil 11 öffnen und den dosierten Lenkölstrom zum Lenkzylinder 2 fließen lässt (Fig. 2). Dieser Druck vor dem federbelasteten Sperrventil 11 belastet aber auch die nichtfederbelastete Seite des Regelschiebers 33 des Stromregelventil 23 und verschiebt den Regelschieber 33 in eine Offenstellung. Diese Offenstellung hat aber keine Wirkung, weil wegen der drucklosen Zulaufleitung 8 vor der verstellbaren Eingangsdrossel 10 kein gleichgerichteter Nebenstrom fließen kann und weil das Rückschlagventil 24 in der Nebenleitung 20 einen Rückfluss über die Nebenleitung 20 verhindert.
Im Notlenkbetrieb wird dem Lenkzylinder 2 also nur der von der Dosierpumpe 7 geförderte Ölstrom zur Verfügung gestellt.

### Liste der Bezugszeichen

- 1: Lenkeinrichtung
- 2: Lenkzylinder
- 3: Zulaufanschluss
- 4: Rücklaufanschluss
- 5: Zylinderanschluss
- 6: Lastsignalanschluss
- 7: Dosierpumpe
- 8: Zulaufleitung
- 9: Rücklaufleitung
- 10: Eingangsdrossel
- 11: federbelastetes Sperrventil mit integrierter Drossel
- 12: erste verstellbare Zylinderdrossel
- 13: zweite verstellbare Zylinderdrossel
- 14: Rücklaufdrossel
- 15: Lastsignalleitung
- 16: erste verstellbare Lastsignaldrossel
- 17: Konstantdrossel
- 18: Zweigleitung
- 19: zweite verstellbare Lastsignaldrossel
- 20: Nebenleitung
- 21: erster Knotenpunkt
- 22: zweiter Knotenpunkt
- 23: Stromregelventil
- 24: Rückschlagventil
- 25: Steuerleitung
- 26: Verbindungsleitung
- 27: Absperrdrossel
- 28: Steuerleitung
- 29: Regelfeder
- 30: Gehäuse
- 31: Eingangsanschluss
- 32: Ausgangsanschluss
- 33: Regelschieber
- 34: Gehäusedeckel
- 35: Ringkanal
- 36: radialer Durchbruch
- 37: Druckraum
- 38: radialer Durchbruch
- 39: Ringkanal
- 40: Saugleitung

## Patentansprüche

1. Hydraulische Lenkeinrichtung mit Stromverstärkung, im wesentlichen bestehend aus einem Steuerventil und einer Dosierpumpe (7), wobei das Steuerventil miteinander und mit der Dosierpumpe (7) korrespondierende Leitungen besitzt, die zwischen einem Zulaufanschluss (3) und mehreren Zylinderanschlüssen (5) eine Zulaufleitung (8) für einen Hauptstrom mit einer verstellbaren Eingangsdrossel (10), der Dosierpumpe (7) und einer Messdrossel sowie eine die Dosierpumpe (7) und die verstellbare Eingangsdrossel (10) umgehende Nebenleitung (20) für einen Nebenstrom mit einem Stromregelventil (23) ausbilden und das Stromregelventil (23) eine von der Kraft einer Druckfeder (29) belastete Schließstellung und eine regelbare, von der Druckdifferenz der Messdrossel gesteuerte Offenstellung besitzt,
**dadurch gekennzeichnet, dass**
- die Messdrossel in der Zulaufleitung (8) als ein federbelastetes, in Richtung des Lenkzylinders (2) öffnendes Sperrventil mit einer Drossel (11) ausgeführt ist und
- die Kräfte der Feder des federbelasteten Sperrventils (11) und der Regelfeder (29) des Stromregelventils (23) so aufeinander abgestimmt sind, dass das Stromregelventil (23) annähernd gleich wie das federbelastete Sperrventil (11) öffnet.

2. Hydraulische Lenkeinrichtung nach Anspruch 1,
**dadurch gekennzeichnet, dass** die Vorspannung der Regelfeder (29) des Stromregelventils (23) oder die Feder des Sperrventils (11) einstellbar ausgeführt ist.

3. Hydraulische Lenkeinrichtung nach Anspruch 2,
**dadurch gekennzeichnet, dass** das Stromregelventil (23) als ein Zwei-Wege-Strombegrenzungsventil ausgeführt ist, dessen Regelschieber (33) einen degressiv verlaufenden Öffnungsquerschnitt besitzt, wobei der degressive Öffnungsverlauf am Regelschieber (33) so gewählt ist, dass er den druckabhängigen und progressiven Verlauf des Durchflussstromes des federbelasteten Sperrventils (11) kompensiert.

4. Hydraulische Lenkeinrichtung nach Anspruch 1,
**dadurch gekennzeichnet, dass** in der Nebenleitung (20) ein einen Rückfluss im Notlenkbetrieb verhinderndes Rückschlagventil (24) angeordnet ist.

## Claims

1. Hydraulic steering system with flow amplification, essentially comprising a control valve and a metering pump (7), which control valve has lines communicating with one another and with the metering pump (7) which form an inlet line (8) for a main flow between an inlet connector (3) and several cylinder connectors (5) incorporating an adjustable inlet throttle (10), the metering pump (7) and a metering throttle, as well as a bypass line (20) for a bypass flow, bypassing the metering pump (7) and the adjustable inlet throttle (10), incorporating a flow control valve (23), and the flow control valve (23) has a closed position into which it is biased by the force of a compression spring (29) and a controllable open position controlled by the pressure difference of the metering throttle,
**characterised in that**
- the metering throttle is provided in the form of a spring-biased shut-off valve in the inlet line (8), with a throttle (11) opening in the direction of the steering cylinder (2) and
- the forces of the spring of the spring-biased shut-off valve (11) and the control spring (29) of the flow control valve (23) are set relative to one another so that the flow control valve (23) opens more or less to the same degree as the spring-biased shut-off valve (11).

2. Hydraulic steering system as claimed in claim 1, **characterised in that** the biasing of the control spring (29) of the flow control valve (23) or the spring of the shut-off valve (11) is adjustable.

3. Hydraulic steering system as claimed in claim 2, **characterised in that** the flow control valve (23) is a two-way flow-limiting valve, the control slide (33) of which has a degressively extending opening cross-section, and the degressive opening characteristic at the control slide (33) is selected so that it compensates the pressure-dependent and progressive characteristic of the flow circulating through the spring-biased shut-off valve (11).

4. Hydraulic steering system as claimed in claim 1, **characterised in that** a non-return valve (24) is disposed in the bypass line (20), preventing a back-flow in emergency steering mode.

## Revendications

1. Installation de direction à amplification de débit, constituée essentiellement d'une soupape de commande et d'une pompe de dosage (7), la soupape de commande ayant des conduites correspondant entre elles et avec la pompe de dosage (7), qui forment entre un raccord d'entrée (3) et plusieurs raccords de cylindre (5) d'une part une conduite d'arrivée (8) pour un débit principal avec un étranglement d'entrée réglable (10), la pompe de dosage (7) et un étranglement de dosage, ainsi que d'autre part une dérivation (20) entourant la pompe de dosage (7) et l'étranglement d'entrée réglable (10) pour un débit de dérivation avec une soupape de régulation de débit (23), et dont la soupape de régulation de débit (23) est commandée en position de fermeture par la force d'un ressort de compression (29) et en position d'ouverture réglable par la différence de pression de l'étranglement de dosage,
**caractérisée en ce que**
- l'étranglement de dosage est réalisé dans la conduite d'arrivée (8) sous la forme d'un clapet anti-retour avec un étranglement (11) commandé par ressort, s'ouvrant dans la direction du cylindre de direction (2) et
- les forces du ressort du clapet anti-retour commandé par ressort (11) et du ressort de réglage (29) de la soupape de régulation de débit (23) sont adaptées l'une sur l'autre de sorte que la soupape de régulation de débit (23) s'ouvre approximativement comme le clapet anti-retour commandé par ressort (11).

2. Installation de direction hydraulique selon la revendication 1,
**caractérisée en ce que**
la précontrainte du ressort de réglage (29) de la soupape de régulation de débit (23) ou le ressort du clapet anti-retour (11) sont réglables.

3. Installation de direction hydraulique selon la revendication 2,
**caractérisée en ce que**
la soupape de régulation de débit (23) est une soupape de limitation de débit à deux entrées dont l'organe de réglage (33) possède une section transversale d'ouverture dégressive, et l'écoulement d'ouverture dégressif est choisi sur l'organe de réglage (33) pour compenser l'écoulement dépendant de la pression et progressif du débit du clapet anti-retour commandé par ressort (11).

4. Dispositif de direction hydraulique selon la revendication 1,
**caractérisé en ce que**
la dérivation (20) comporte un clapet anti-retour (24) empêchant un reflux en fonctionnement de secours de la direction.
